# EUROPÄISCHE PATENTSCHRIFT

(11) **EP 3 618 677 B1**
(45) Veröffentlichungstag und Bekanntmachung des Hinweises auf die Patenterteilung: **26.01.2022**
(21) Anmeldenummer: 18826310.7
(22) Anmeldetag: 18.12.2018
(51) Int. Cl.: A47L 11/24, A47L 11/28

(54) **REINIGUNGSVORRICHTUNG UND VERFAHREN ZUM BETREIBEN EINER REINIGUNGSVORRICHTUNG**
CLEANING DEVICE AND METHOD OF OPERATION OF A CLEANING DEVICE
DISPOSITIF DE NETTOYAGE ET METHODE D'OPERATION D'UN DISPOSITIF DE NETTOYAGE

(30) Priorität: 21.12.2017 DE 102017130954
(43) Veröffentlichungstag der Anmeldung: 11.03.2020
(73) Patentinhaber: Enway GmbH, 12099 Berlin (DE)
(72) Erfinder: CHEN, Bo, 12099 Berlin (DE); NORDT, Julian, 12099 Berlin (DE); AMBEGODA, Thanuja, 12099 Berlin (DE)
(74) Vertreter: Horn Kleimann Waitzhofer Patentanwälte PartG mbB
(86) Internationale Anmeldenummer: PCT/EP2018/085677
(87) Internationale Veröffentlichungsnummer: WO 2019/121804

(56) Entgegenhaltungen:
- JP-A- 2012 210 395
- US-A- 5 613 261

## Beschreibung

Die vorliegende Erfindung betrifft eine Reinigungsvorrichtung und ein Verfahren zum Betreiben einer Reinigungsvorrichtung.

Es sind Reinigungsvorrichtungen bekannt, die selbständig eine bestimmte Reinigungsoperation vornehmen, wie beispielsweise Saugroboter oder Wischroboter. Diese werden beispielsweise im privaten Bereich zur Wohnungsreinigung eingesetzt. Ein solcher Saugroboter kann dazu eingerichtet sein, seinen Weg selbst zu bestimmen. Bei herkömmlichen Saugrobotern ist eine Zielvorgabe hierbei, dass der Saugroboter in einem Reinigungsdurchgang die gesamte Oberfläche des Bereichs, in dem er eingesetzt wird, abdeckt. Dies kann in unterschiedlicher Weise erreicht werden. Derartige Ansätze zur Bahnbestimmung des Saugroboters werden beispielsweise als flächenoptimierte Bahnbestimmungsmethoden bezeichnet.

Bei sehr großen Flächen, wie sie beispielsweise im öffentlichen Raum bei Plätzen auftreten, tritt bei einer derart bestimmten flächenoptimierten Bahn das Problem auf, dass die Wegstrecke der Bahn sehr lang werden kann. Dann benötigt die Reinigungsvorrichtung eine sehr lange Zeit, um die gesamte Bahn abzufahren und die Fläche zu reinigen.

Die DE 10 2013 113 426 A1, die DE 10 2014 110 265 A1 sowie die DE 20 2015 103 904 beschreiben bekannte Reinigungsvorrichtungen.

Vor diesem Hintergrund besteht eine Aufgabe der vorliegenden Erfindung darin, eine verbesserte Reinigungsvorrichtung vorzuschlagen.

Gemäß einem ersten Aspekt wird eine Reinigungsvorrichtung mit einer Aufnahmevorrichtung zum Aufnehmen von Verschmutzungsobjekten, einer Antriebseinrichtung zum Bewegen der Reinigungsvorrichtung, einer Steuerungsvorrichtung zum Ansteuern der Antriebseinrichtung zum Lenken einer Bewegung der Reinigungsvorrichtung in Abhängigkeit von von einer Sensorik bereitgestellten Sensorsignalen vorgeschlagen. Die Reinigungsvorrichtung umfasst eine Erfassungseinheit zum Erfassen von in einem vorgebbaren Bereich angeordneten Verschmutzungsobjekten, eine Bewertungseinheit zum Klassifizieren der von der Erfassungseinheit erfassten Verschmutzungsobjekte in unterschiedliche Verschmutzungsklassen, und eine Bahnplanungseinheit zum Ermitteln einer optimierten Bahn für die Reinigungsvorrichtung in dem vorgegebenen Bereich in Abhängigkeit einer jeweiligen Position der erfassten Verschmutzungsobjekte und der jeweiligen Verschmutzungsklasse der Verschmutzungsobjekte. Die Steuerungsvorrichtung ist dazu eingerichtet, die Antriebseinrichtung zum Durchführen einer Reinigungsfahrt entlang der ermittelten optimierten Bahn anzusteuern.

Diese Reinigungsvorrichtung weist den Vorteil auf, dass sie in Abhängigkeit von vorgebbaren Parametern eine optimale oder optimierte Bahn zum Reinigen des vorgegebenen Bereichs ermittelt und die Verschmutzungsobjekte entlang der optimalen und/oder optimierten Bahn entfernt. Hierfür benötigt die Reinigungsvorrichtung insbesondere weniger Zeit und/oder erzielt ein verbessertes Reinigungsergebnis bezogen auf den vorgegebenen Bereich als eine herkömmliche Reinigungsvorrichtung. Somit ist diese Reinigungsvorrichtung insbesondere dazu geeignet, eine Effizienz bei der Reinigung eines vorgebbaren Bereichs zu erhöhen und damit effektiv Betriebskosten und/oder Unterhaltskosten zu reduzieren.

Unter einer Reinigungsvorrichtung wird vorliegend insbesondere eine Maschine verstanden, die zumindest ein Werkzeug aufweist, mittels welchem sie in der Lage ist, ein Verschmutzungsobjekt aufzunehmen und/oder von einer zu reinigenden Oberfläche auf eine sonstige Weise zu entfernen. Das Werkzeug kann beispielsweise als eine Bürste, insbesondere eine Rundbürste mit einem Antrieb, ausgebildet sein. Die Reinigungsvorrichtung kann weitere Werkzeuge, die sich zur Reinigung einer Oberfläche eignen, aufweisen, wie beispielsweise eine Düsenanordnung zur Beaufschlagung der Oberfläche mit einer Flüssigkeit und/oder eine Saugvorrichtung.

Unter einem Verschmutzungsobjekt wird vorliegend jegliche Art einer Verschmutzung verstanden. Dies kann insbesondere Unrat, Müll, Staub, Dreck und/oder organisches Material umfassen. Im Folgenden kann das Verschmutzungsobjekt auch als Verschmutzung und/oder Schmutz bezeichnet werden. Die Verschmutzung kann dabei in fester Form und/oder in flüssiger Form vorliegen. Beispielsweise kann auch ein Objekt, das gemeinhin nicht als Schmutz oder Verschmutzung wahrgenommen wird, als ein Verschmutzungsobjekt gelten.

Die Aufnahmevorrichtung zum Aufnehmen von Verschmutzungsobjekten ist beispielsweise als ein Aufnahmeraum, ein Aufnahmebehälter und/oder eine Zuführvorrichtung zum Zuführen von Verschmutzungsobjekten zu einem entnehmbaren und/oder austauschbaren Aufnahmebehälter ausgebildet. Ein solcher Aufnahmebehälter ist beispielsweise als ein flüssigkeitsdichter Container ausgebildet, der ein bestimmtes Volumen an Schmutz aufnehmen kann. Es kann vorgesehen sein, dass der Aufnahmeraum oder der Aufnahmebehälter beispielsweise auch eine Trennvorrichtung zum Abtrennen flüssiger Bestandteile von festen Bestandteilen aufweist. Ferner können getrennte Aufnahmebehälter für die jeweiligen Bestandteile vorgesehen sein. Ferner kann eine Verdichtungsvorrichtung vorgesehen sein, die den aufgenommenen Schmutz verdichtet und so eine Aufnahmekapazität des Aufnahmebehälters effektiv vergrößert.

Unter einer Antriebseinrichtung wird vorliegend beispielsweise ein auf Rädern montiertes Gestell, wie eine Karosserie, verstanden, wobei beispielsweise Motoren, insbesondere Elektromotoren, vorgesehen sind, um zumindest eines der Räder anzutreiben. Zum Beispiel weist das Gestell eine dreieckige Grundform auf, wobei an jeder der drei Ecken ein Rad montiert ist. Zumindest eines der Räder ist dabei angetrieben und ausrichtbar befestigt und kann über einen Motor zum Lenken einer Bewegung des Gestells, und damit der Reinigungsvorrichtung, ausgerichtet werden. Die beiden weiteren Räder sind beispielsweise als Stützräder ausgebildet und können nicht bewegt oder angetrieben werden. Viele weitere Ausführungsformen sind hierbei denkbar.

Die Steuerungsvorrichtung ist insbesondere die zentrale Steuerungsvorrichtung für die Reinigungsvorrichtung, die alle wesentlichen Funktionen der Reinigungsvorrichtung steuert und/oder koordiniert. Unter Koordinieren wird beispielsweise verstanden, dass neben der Steuerungsvorrichtung weitere Vorrichtungen, beispielsweise gerätespezifische Steuerungseinheiten, vorgesehen sind, die eine Steuerung eines jeweiligen Geräts in Abhängigkeit der Steuerungsvorrichtung ausführen. Die Steuerungsvorrichtung kann hardwaretechnisch und/oder auch softwaretechnisch implementiert sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein.

Die Steuerungsvorrichtung ist insbesondere zum Lenken einer Bewegung der Reinigungsvorrichtung eingerichtet. Das heißt beispielsweise, dass die Steuerungsvorrichtung die Antriebseinheit so ansteuert, dass die Antriebseinheit die Bewegung entsprechend umsetzt. Die Steuerungsvorrichtung steuert die Antriebseinheit in Abhängigkeit von Sensorsignalen, die von einer Sensorik der Reinigungsvorrichtung bereitgestellt werden.

Die Sensorik umfasst insbesondere Sensoren, die ein Erkennen einer Umgebung der Reinigungsvorrichtung ermöglichen. Dies sind beispielsweise Ultraschall-, Infrarot-, Bild- und/oder taktile Sensoren. Ein Ultraschallsensor eignet sich insbesondere zum Erfassen eines Abstands zu einem Objekt. Ein Infrarotsensor eignet sich insbesondere zum Erkennen von Wärme abgebenden Objekten, wie beispielsweise Menschen und/oder Tiere. Die Sensorik erfasst beispielsweise auch Daten der Antriebseinrichtung, wie beispielsweise eine Stellung und/oder die Drehzahl einzelner Räder, weitere Umgebungs- oder Umweltdaten wie eine Außentemperatur, eine Windrichtung, eine Windgeschwindigkeit sowie eine Zustand der Oberfläche, auf dem sich die Reinigungsvorrichtung bewegt. Unter dem Zustand der Oberfläche wird beispielsweise ein Typ der Oberfläche, wie beispielsweise Asphalt, Beton, Pflaster, Fließen, Teppich, Gras und/oder Erde, und/oder Qualität der Oberfläche, wie nass, trocken, weich und/oder hart, verstanden. Die Sensorik umfasst insbesondere auch einen Positionssensor, der ein Ermitteln einer absoluten Position ermöglicht, wie beispielsweise einen GPS-Sensor, einen Galileo-Sensor und/oder einen Glonass-Sensor.

Die Sensorik stellt ein Sensorsignal eines jeweiligen Sensors der Steuerungsvorrichtung bereit. Die Steuerungsvorrichtung ist dazu eingerichtet, in Abhängigkeit des oder der Sensorsignale die Antriebseinrichtung zu steuern. Dies kann ein Verarbeiten, Analysieren und/oder Auswerten der Sensorsignale umfassen. Beispielsweise kann die Steuerungsvorrichtung eine Bildverarbeitung eines Kamerabildes, insbesondere eines Bilderstroms, durchführen und sich bewegende Objekte erkennen. Hier ist eine Vielzahl von Signalanalysen denkbar. Die Steuerungsvorrichtung ist insbesondere dazu eingerichtet, ein jedes Sensorsignal gemäß einer geeigneten Signalanalyse zu analysieren.

Mit der Sensorik kann die Steuerungsvorrichtung insbesondere zum autonomen Steuern der Reinigungsvorrichtung eingerichtet sein. Hierbei stehen auch Sicherheitsaspekte im Vordergrund und werden entsprechend berücksichtigt, so dass bei einem autonomen Betrieb der Reinigungsvorrichtung keine Lebewesen verletzt und auch keine sonstigen Gegenstände, wie beispielsweise Autos, beschädigt werden.

Die Erfassungseinheit zum Erfassen von in dem vorgebbaren Bereich angeordneten Verschmutzungsobjekten, die Bewertungseinheit zum Klassifizieren der von der Erfassungseinheit erfassten Verschmutzungsobjekte in unterschiedliche Verschmutzungsklassen und/oder die Bahnplanungseinheit zum Ermitteln einer optimierten Bahn können hardwaretechnisch und/oder auch softwaretechnisch implementiert sein. Bei einer hardwaretechnischen Implementierung kann die jeweilige Einheit zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Insbesondere kann die jeweilige Einheit als Teil der Steuerungsvorrichtung implementiert sein.

Die Erfassungseinheit kann insbesondere die Sensorsignale, die von der Sensorik bereitgestellt werden, zum Erfassen von Verschmutzungsobjekten auswerten. Dies ist besonders vorteilhaft, da die Sensorik somit eine Doppelfunktion erfüllt, d.h. sie wird einerseits zum Steuern der Antriebseinrichtung und andererseits zum Erfassen von Verschmutzungsobjekten eingesetzt. Somit kann eine Anzahl an Sensoren reduziert werden. Die Erfassungseinheit ist dazu eingerichtet, Verschmutzungsobjekte in einem vorgebbaren Bereich zu erfassen. Der vorgebbare Bereich kann beispielsweise eine insgesamt zu reinigende Fläche umfassen. Der vorgebbare Bereich kann beispielsweise durch Koordinaten definiert sein, wobei jeweilige Koordinaten zum Beispiel Eckpunkte eines Polygons auf einer Landkarte definieren, die durch gerade Linien zu verbinden sind, wobei die umschlossene Fläche der vorgebbare Bereich ist. Der vorgebbare Bereich kann aber auch dynamisch aktualisierbar sein, entweder durch die Reinigungsvorrichtung selbst, zum Beispiel wenn ein Teilbereich eines vorgegebenen Bereichs als nicht zugänglich erkannt wird, oder auch von außen, indem ein vorgegebener Bereich verändert wird. Der vorgebbare Bereich kann beispielsweise als ein Pfad in einer Stadt definiert werden, wobei der damit vorgegebene Bereich zum Beispiel einen Korridor mit einer Breite von 10 m entlang des Pfades umfasst.

Vorteilhaft erfasst die Erfassungseinheit Verschmutzungsobjekte in dem vorgebbaren Bereich dynamisch. Somit kann jederzeit ein neues Verschmutzungsobjekt erfasst und in der Folge entsprechend berücksichtigt werden. Dies ist dann vorteilhaft, wenn ein vorgegebener Bereich von der Sensorik nicht vollständig erfasst werden kann, da Teilbereiche des Bereichs außerhalb eines Erfassungsbereichs einzelner Sensoren liegen. Wenn sich die Reinigungsvorrichtung bewegt und dadurch diese Teilbereiche nunmehr erfassbar sind, können auch die darin liegenden Verschmutzungsobjekte erfasst werden.

Die Erfassungseinheit ist beispielsweise dazu eingerichtet, ein Verschmutzungsobjekt anhand seiner äußeren Erscheinungsform zu erfassen. Die äußere Erscheinungsform umfasst dabei beispielsweise Maße, eine Geometrie, eine Farbe und/oder eine Oberflächenstruktur des Verschmutzungsobjekts.

Die Bewertungseinheit zum Klassifizieren der von der Erfassungseinheit erfassten Verschmutzungsobjekte in unterschiedliche Verschmutzungsklassen ist insbesondere dazu eingerichtet, die erfassten Eigenschaften des erfassten Verschmutzungsobjekts zu analysieren. Diese Eigenschaften umfassen insbesondere die äußere Erscheinungsform sowie weitere Eigenschaften, wie beispielsweise hart, weich, flüssig, fest, klebrig und/oder anhaftend. Ferner können weitere Sensoren, die möglicherweise speziell der Bewertungseinheit zugeordnet sind, vorgesehen sein, wie beispielsweise Duftsensoren und/oder weitere chemische Sensoren. Die Bewertungseinheit kann dabei die von diesen Sensoren erfassten Sensorsignale bei der Klassifizierung berücksichtigen.

Die Klassifizierung erfolgt dabei beispielsweise in Abhängigkeit von vorbestimmten Parameterwerten und/oder Parameterbereichen für ein jeweiliges Sensorsignal oder einem Ergebnis einer Analyse eines jeweiligen Sensorsignals. Diese Parameterwerte und/oder Parameterbereiche können insbesondere fest vorgegeben sein, sie können dynamisch und situationsabhängig von der Bewertungseinheit oder der Steuerungsvorrichtung ermittelbar sein und/oder sie können über einen Kommunikationskanal einspielbar sein. Verschiedene Verschmutzungsklassen unterscheiden sich beispielsweise durch die Art der Verschmutzung. Zum Beispiel kann für Laub, für Unrat, wie beispielsweise Rollsplit, Dreck, Zigarettenkippen oder sonstigen kleinteiligen Müll, für organisches Material, wie Exkremente, für Flüssigkeiten und/oder für größere Objekte jeweils eine Verschmutzungsklasse vorgesehen sein.

Ein Beispiel für ein dynamisches Anpassen ist nachfolgend beschrieben. Beispielsweise weist die Reinigungsvorrichtung einen gewissen Flüssigkeitsvorrat für den Betrieb eines Hochdruckreinigers auf. Nachdem die Reinigungsvorrichtung eine Anzahl an Verschmutzungsobjekten mit dem Hochdruckreiniger behandelt hat, ist der Flüssigkeitsvorrat aufgebraucht. Danach kann die Reinigungsvorrichtung den Hochdruckreiniger nicht mehr zum Behandeln von Verschmutzungen einsetzen. Verschmutzungsobjekte, die eine Behandlung mit einem Hochdruckreiniger erfordern, werden daher fortan von der Behandlung ausgenommen, bis der Flüssigkeitsvorrat wieder aufgefüllt ist. Beispielsweise kann die Reinigungsvorrichtung ein entsprechendes Signal an eine Zentrale absetzen, das signalisiert, dass der Flüssigkeitsvorrat der Reinigungsvorrichtung aufgebraucht ist, woraufhin ein Service-Mitarbeiter die Reinigungsvorrichtung aufsucht und den Flüssigkeitsspeicher wieder auffüllt.

Das Klassifizieren kann auch als Einstufen, Einordnen, Kategorisieren, Bewerten und/oder Beurteilen bezeichnet werden. Eine Verschmutzungsklasse kann auch als eine Schmutzkategorie oder eine Schmutzordnung bezeichnet werden. Einer jeweiligen Verschmutzungsklasse kann insbesondere eine Priorität oder Wichtigkeit zugeordnet sein, die festlegt, wie wichtig das Entfernen von Schmutz der jeweiligen Klasse ist. Dies kann insbesondere durch einen Betreiber der Reinigungsvorrichtung individuell festlegbar sein.

Die Bahnplanungseinheit ist zum Ermitteln einer optimierten Bahn für die Reinigungsvorrichtung in dem vorgegebenen Bereich in Abhängigkeit einer jeweiligen Position der erfassten Verschmutzungsobjekte und der jeweiligen Verschmutzungsklasse der Verschmutzungsobjekte eingerichtet. Unter einer optimierten Bahn wird insbesondere verstanden, dass die Bahn unter Berücksichtigung der Verschmutzungsklassen von Verschmutzungsobjekten und/oder eines Zeitaufwands optimiert wird. Hierbei können Vorgaben zur Optimierung individuell anpassbar sein.

Beispielsweise kann vorgesehen sein, dass Hundekot mit erhöhter Priorität entfernt werden soll, da Hundekot von Menschen als besonders starke Verschmutzung wahrgenommen wird. Ferner kann auch die Größe eines Verschmutzungsobjekts oder auch die Menge bei einer Ansammlung von kleineren Verschmutzungsobjekten, wie beispielsweise Zigarettenkippen, bei der Optimierung eine Rolle spielen. Ferner werden Positionen von Verschmutzungsobjekten bei der Optimierung berücksichtigt. Insbesondere werden beispielsweise relative Positionen ermittelt. Auf diese Weise lässt sich besonderes einfach erkennen, welche Verschmutzungen nahe beieinanderliegen und daher mit vergleichsweise kurzen Wegstrecken auf einer Reinigungsfahrt zu verbinden sind. Ein Beispiel für die Bahnoptimierung ist eine Lösung des als "Problem des Handelsreisenden" bekannten Optimierungsproblems, möglicherweise zunächst ohne Berücksichtigung von Verschmutzungsklassen der erfassten Verschmutzungsobjekte.

Die Verschmutzungsklassen stellen mitunter Gewichte für die verschiedenen Verschmutzungsobjekte dar, die bei der Lösung des Optimierungsproblems berücksichtigt werden. Dies kann beispielsweise dazu führen, dass die optimierte Bahn zunächst einen längeren Wegabschnitt zu einem als besonders wichtig eingestuften Verschmutzungsobjekt vorsieht, wobei kleinere, näher liegende Verschmutzungsobjekte zunächst nicht angesteuert werden.

Die Steuerungsvorrichtung ist dazu eingerichtet, die Antriebseinrichtung zum Durchführen einer Reinigungsfahrt entlang der ermittelten optimierten Bahn anzusteuern. Die Bahnplanungseinheit übergibt hierfür die ermittelte optimierte Bahn an die Steuerungsvorrichtung, woraufhin diese mittels der Antriebseinrichtung die Reinigungsvorrichtung in Bewegung setzt. Sobald ein Verschmutzungsobjekt entlang der Bahn erreicht ist, wird das Verschmutzungsobjekt von der Reinigungsvorrichtung behandelt, bevorzugt wird es aufgenommen und von der Oberfläche entfernt. Hierbei kann vorgesehen sein, dass die Steuerungsvorrichtung dazu eingerichtet ist, ein Werkzeug zur Behandlung des Verschmutzungsobjekts erst bei einem Erreichen des Verschmutzungsobjekts anzusteuern und zu aktivieren. Dies kann Energie einsparen und dazu beitragen, Emissionen durch die Reinigungsvorrichtung zu reduzieren.

Die Reinigungsvorrichtung ist somit in der Lage, innerhalb des vorgebbaren Bereichs entlang einer optimierten Bahn, die eine Gewichtung von Schmutz berücksichtigt, Verschmutzungen zu beseitigen und damit eine effiziente Reinigung des vorgebbaren Bereichs zu ermöglichen. Dabei kann die Reinigungsvorrichtung insbesondere einen Zeitaufwand zur Reinigung reduzieren und kann besonders schwerwiegende Verschmutzungen bevorzugt behandeln, so dass ein für Menschen subjektiv aufgeräumter und/oder sauberer Gesamteindruck des Bereichs besonders schnell erreicht wird, auch wenn zwischenzeitlich weitere Verschmutzungsobjekte in dem Bereich verbleiben. Darüber hinaus kann die Reinigungsvorrichtung zum autonomen Betrieb eingerichtet sein, wodurch ein Überwachungsaufwand durch Menschen reduziert werden kann. Ein weiterer Vorteil ist, dass die Reinigungsvorrichtung Emissionen, insbesondere Lärm und/oder aufgewirbelten Staub, durch selektiven Einsatz von spezialisierten Reinigungswerkzeugen reduzieren kann.

Gemäß einer Ausführungsform der Reinigungsvorrichtung ist die Erfassungseinheit dazu eingerichtet, jedem erfassten Verschmutzungsobjekt einen Verschmutzungsobjektsvektor zuzuordnen, der die Position des erfassten Verschmutzungsobjekts, einen Typ des erfassten Verschmutzungsobjekts und/oder eine Menge des erfassten Verschmutzungsobjekts umfasst.

Der Typ eines Verschmutzungsobjekts ist beispielsweise durch die Art des Verschmutzungsobjekts gegeben. Ferner kann der Typ verschiedene Eigenschaften des Verschmutzungsobjekts, wie vorstehend bereits erläutert, umfassen. Eine Menge des Verschmutzungsobjekts kann beispielsweise eine Anzahl, ein Volumen und/oder eine Verteilung des Verschmutzungsobjekts umfassen.

Gemäß einer weiteren Ausführungsform der Reinigungsvorrichtung ist die Bewertungseinheit dazu eingerichtet ist, ein erfasstes Verschmutzungsobjekt in Abhängigkeit des zugeordneten Verschmutzungsobjektsvektors zu klassifizieren. Der Verschmutzungsobjektvektor umfasst insbesondere alle Informationen, die für das Klassifizieren relevant sind. Dies ist vorteilhaft, da der Verschmutzungsobjektvektor somit ein einheitliches Datenformat darstellt. Ausgehend von diesem einheitlichen Datenformat lassen sich weitere Verarbeitungsschritte effizient umsetzen.

Gemäß einer weiteren Ausführungsform der Reinigungsvorrichtung umfasst die Erfassungseinheit ein von der Reinigungsvorrichtung abkoppelbares Feldgerät und eine Empfangseinheit, wobei das Feldgerät zum Erfassen zumindest eines der Verschmutzungsobjekte und zum Übertragen einer für das erfasste Verschmutzungsobjekt indikativen Information an die Empfangseinheit eingerichtet ist.

Das Feldgerät ist beispielsweise als ein Handgerät mit einer Sensorvorrichtung, beispielsweise einem Bildsensor, einem chemischen Sensor und/oder einem Positionssensor ausgebildet. Es kann vorgesehen sein, dass ein Vorarbeiter das Handgerät bedient. Beispielsweise nimmt der Vorarbeiter das Handgerät von der Reinigungsvorrichtung ab und beginnt damit, Verschmutzungsobjekte in einem bestimmten Bereich zu markieren. Hierzu begibt sich der Arbeiter zu dem Verschmutzungsobjekt und betätigt zum Beispiel eine Eingabetaste auf dem Handgerät. Es kann vorgesehen sein, dass der Arbeiter mittels der Sensorvorrichtung ein Sensorsignal des Verschmutzungsobjekts erfasst. Insbesondere wird mittels des Positionssensors die Position eines jeweiligen Verschmutzungsobjekts erfasst. Die Position kann dabei insbesondere relativ zu der Reinigungsvorrichtung erfasst werden, das heißt als eine Entfernung und eine Richtung. Die derart erfassten Informationen zu einem jeweiligen Verschmutzungsobjekt werden in Form einer indikativen Information an die Empfangseinheit an der Reinigungsvorrichtung übertragen. Dies erfolgt insbesondere drahtlos, beispielsweise mittels WLAN, Bluetooth^{®}, Infrarot, ZigBee^{®}, ANT^{®} und/oder ANT+^{®}. Die Datenübertragung kann dabei insbesondere auch kryptographisch gesichert erfolgen. Zum Beispiel kann vorgesehen sein, dass die indikative Information die Form des Verschmutzungsobjektvektors aufweist und als ein oder mehrere Datenpakete übertragen wird.

In Ausführungsformen kann vorgesehen sein, dass das Handgerät eine Schnittstelle zur Eingabe einer Verschmutzungsklasse aufweist. Dann kann der Arbeiter, der das Handgerät bedient, bereits manuell eine Vorauswahl für die Verschmutzungsklasse eines jeweiligen Verschmutzungsobjekts treffen. Die Bewertungseinheit kann dazu eingerichtet sein, diese Vorauswahl zu übernehmen oder alternativ die Vorauswahl nicht zu übernehmen, da beispielsweise eine fehlerhafte Einordnung durch den Arbeiter erfolgte. Dies kann die Bewertungseinheit zum Beispiel in Abhängigkeit von Sensorsignalen eines Verschmutzungsobjekts ermitteln.

In Ausführungsformen kann ferner vorgesehen sein, dass das Feldgerät als eine autonome Einrichtung, wie beispielsweise ein Roboter, ausgebildet ist. Dieser Roboter kann von der Reinigungsvorrichtung wie eine Drohne ausgesendet werden, um zum Beispiel einen durch die Reinigungsvorrichtung vorbestimmten Bereich auf Verschmutzungsobjekte hin zu analysieren. Hierzu kann der Roboter verschiedene Sensoren aufweisen, die ein jeweiliges Verschmutzungsobjekt erfassen. Die Reinigungsvorrichtung kann insbesondere auch mehrere dieser Roboter aufweisen. Insbesondere kann eine Flugdrohne, beispielsweise ein Quadrokopter, vorgesehen sein, die bei einem Einsatz im Freien den vorgebbaren Bereich aus der Luft erfasst.

Gemäß einer weiteren Ausführungsform der Reinigungsvorrichtung weist die Reinigungsvorrichtung eine Mehrzahl an Werkzeugen zum Behandeln von Verschmutzungsobjekten auf, welche durch die Steuerungsvorrichtung selektiv ansteuerbar sind, wobei ein jeweiliges Werkzeug zum Behandeln von Verschmutzungsobjekten einer bestimmten Verschmutzungsklasse optimiert ist.

Ein Werkzeug ist beispielsweise eine funktionelle Anordnung von Bauteilen, die sich zur Behandlung der zu reinigenden Oberfläche eignet. Das Werkzeug kann insbesondere eine mechanische, eine physikalische und/oder eine chemische Reinigungswirkung aufweisen. Ein Beispiel für ein mechanisch wirkendes Werkzeug ist eine Bürste. Ein Beispiel für ein physikalisch wirkendes Werkzeug ist eine Saugvorrichtung. Ein weiteres Beispiel hierfür ist eine Bestrahlungseinrichtung zum Bestrahlen der Oberfläche mit elektromagnetischer Strahlung, beispielsweise Wärmestrahlung, Mikrowellenstrahlung und/oder UV-Strahlung. Ein Beispiel einer chemisch wirkenden Behandlung ist ein Aufbringen eines Reinigungsmittels und/oder eines Lösungsmittels. Werkzeuge können auch eine kombinierte Wirkung aufweisen, wie beispielsweise ein Hochdruckreiniger, der mit erwärmtem Wasser betrieben wird. Hierbei ergibt sich eine mechanische Reinigungswirkung durch den Druck des Wassers auf der Oberfläche oder auf dem Verschmutzungsobjekt, eine physikalische Reinigungswirkung durch den Wärmeeintrag in das Verschmutzungsobjekt und eine chemische Reinigungswirkung durch die Lösungswirkung des Wassers.

Die Steuerungsvorrichtung ist insbesondere dazu eingerichtet, die Werkzeuge gemäß ihrer individuellen Eignung zum Behandeln von Schmutz einer Verschmutzungsklasse einzusetzen. Beispielsweise kann zum Aufnehmen von losem Unrat und Blättern eine Bürste in Kombination mit einer Saugvorrichtung angesteuert werden. Zum Behandeln von festsitzendem Schmutz kann beispielsweise ein Hochdruckreiniger in Kombination mit einer Nasssaugvorrichtung angesteuerte werden. Bei einem Behandeln eines hygienisch bedenklichen Verschmutzungsobjekts kann vor, während und/oder nach dem Behandeln ein Desinfektionsmittel angewendet werden. Dies kann beispielsweise ein Bestrahlen mit UV-Licht und den Einsatz einer flüssigen oder gasförmigen Chemikalie umfassen.

Gemäß einer weiteren Ausführungsform der Reinigungsvorrichtung ist die Steuerungsvorrichtung dazu eingerichtet, wenn die Reinigungsvorrichtung ein Verschmutzungsobjekt erreicht, in Abhängigkeit der Verschmutzungsklasse des erreichten Verschmutzungsobjekts das für diese Verschmutzungsklasse optimierte Werkzeug auszuwählen und zum Behandeln des Verschmutzungsobjekts anzusteuern.

Auf diese Weise kann ein optimiertes Reinigungs- oder Behandlungsergebnis erzielt werden. Beispielsweise ist eine Bürste ungeeignet zum Aufnehmen eines flüssigen Verschmutzungsobjekts, weshalb hierfür insbesondere die Nasssaugvorrichtung angesteuert wird.

Gemäß einer weiteren Ausführungsform der Reinigungsvorrichtung ist die Bahnplanungseinheit dazu eingerichtet, die optimierte Bahn in Abhängigkeit von zeitlich veränderlichen Bedingungen dynamisch zu aktualisieren.

Die zeitlich veränderlichen Bedingungen umfassen insbesondere Positionen der Verschmutzungsobjekte, eine Änderung der Verschmutzungsobjekte bezüglich ihrer Anzahl, deren Klassifikation und/oder auch zeitlich veränderliche Hindernisse für die Reinigungsvorrichtung, wie beispielsweise sich bewegende Menschen, Tiere und/oder Autos in dem vorgegebenen Bereich.

Insbesondere kann sich bei Annäherung der Reinigungsvorrichtung an ein Verschmutzungsobjekt die Verschmutzungsklasse des Verschmutzungsobjekts ändern, da eine Analysefähigkeit bei geringerem Abstand verbessert sein kann.

Gemäß einer weiteren Ausführungsform der Reinigungsvorrichtung weist die Reinigungsvorrichtung eine Überprüfungseinheit auf, welche dazu eingerichtet ist, nach dem Behandeln eines Verschmutzungsobjekts einen Erfolg des Behandelns des Verschmutzungsobjekts in Abhängigkeit eines Entfernens des Verschmutzungsobjekts zu ermitteln.

Die Überprüfungseinheit umfasst insbesondere jene Sensoren der Sensorik, die zum Erfassen der Verschmutzungsobjekte geeignet sind. Die Überprüfungseinheit ist zum Ermitteln des Erfolgs der Behandlung eines Verschmutzungsobjekts eingerichtet. Wenn die Überprüfungseinheit nach dem Behandeln zum Beispiel kein Verschmutzungsobjekt mehr an der Position ermitteln kann, war die Behandlung erfolgreich. Insbesondere bei flächigen Verschmutzungen, wie Rollsplit oder Laub, kann auch ein bestimmter Grenzwert vorgegeben werden, oberhalb welchem die Behandlung als erfolgreich gilt. So kann zum Beispiel bestimmt werden, dass bei Entfernen von mindestens 90% einer Ausgangsmenge eines Verschmutzungsobjekts die Behandlung erfolgreich war. Unter Entfernen wird insbesondere ein Aufnehmen der Verschmutzungsobjekts mit der Aufnahmevorrichtung der Reinigungsvorrichtung verstanden.

Gemäß einer weiteren Ausführungsform der Reinigungsvorrichtung ist die Steuerungsvorrichtung dazu eingerichtet, in Abhängigkeit des Erfolgs des Behandelns das Verschmutzungsobjekt erneut zu behandeln.

Beispielsweise steuert die Steuerungsvorrichtung hierfür die Antriebseinheit derart an, dass die Reinigungsvorrichtung erneut über die Position des Verschmutzungsobjekts gelenkt wird, wobei erneut selektiv das für die jeweilige Verschmutzungsklasse geeignete Werkzeug angesteuert wird. Es kann auch vorgesehen sein, dass ein zusätzliches und/oder alternatives Werkzeug angesteuert wird. Bei Verschmutzungsobjekten, die verschiedene Schmutzklassen umfassen, kann dies besonders hilfreich sein. Beispielsweise werden in einem ersten Durchgang lose Teile des Verschmutzungsobjekts aufgenommen. In einem zweiten Durchgang wird ein festsitzender Teil des Verschmutzungsobjekts zunächst kurz mittels eines Lösungsmittels angelöst und anschließend mittels eines Hochdruckreinigers von der Oberfläche abgelöst und durch eine Saugvorrichtung aufgenommen.

Gemäß einer weiteren Ausführungsform der Reinigungsvorrichtung ist die Bahnplanungseinheit dazu eingerichtet, mehrere Verschmutzungsobjekte zu einer Gruppe von Verschmutzungsobjekten zusammenzufassen und die optimierte Bahn in Abhängigkeit der Gruppe zu ermitteln.

Insbesondere bei kleinen Verschmutzungsobjekten, wie beispielsweise Zigarettenkippen, die in der Nähe eines Mülleimers oder Aschenbechers verteilt sind, kann ein solches Zusammenfassen effizient sein. Der Gruppe wird beispielsweise ein Gruppenvektor zugeordnet, der zum Beispiel als Superposition der einzelnen Verschmutzungsobjektvektoren der Verschmutzungsobjekte der Gruppe ermittelt werden kann. Auf diese Weise kann ein rechnerischer Aufwand reduziert werden, da insgesamt eine kleinere Anzahl an Verschmutzungsobjekten berücksichtigt werden muss. Ferner lässt sich hierdurch auch vermeiden, dass kleinere Verschmutzungsobjekte unberücksichtigt bleiben, da sie jeweils für sich genommen zum Beispiel eine vergleichsweise geringe Wichtigkeit aufweisen, die Gruppe insgesamt aber ins Gewicht fällt.

Gemäß einer weiteren Ausführungsform der Reinigungsvorrichtung ist diese zum autonomen Reinigen des vorgebbaren Bereichs eingerichtet.

Die Reinigungsvorrichtung kann zum Beispiel vollautonom oder auch teilautonom ausgebildet sein. Unter vollautonom wird beispielsweise verstanden, dass die Reinigungsvorrichtung in einem vorgegebenen Bereich platziert wird, gestartet wird und dann vollautomatisch beginnt, den vorgegebenen Bereich zu reinigen. Unter teilautonom wird beispielsweise verstanden, dass die Reinigungsvorrichtung einem Arbeiter zugeordnet ist, der in dem vorgegebenen Bereich die Verschmutzungsobjekte markiert und/oder verteilt vorliegende Verschmutzungsobjekte, insbesondere Laub, mit einem Besen zu Gruppen zusammenfasst, wobei die Reinigungsvorrichtung entlang einer optimierten Bahn dem Arbeiter folgt und die Verschmutzungsobjekte automatisch aufnimmt.

Gemäß einer weiteren Ausführungsform der Reinigungsvorrichtung ist diese ein Reinigungsroboter, eine Straßenreinigungsmaschine, eine Kehrmaschine oder eine Oberflächenbehandlungsmaschine.

Gemäß einem zweiten Aspekt wird ein Verfahren zum Betreiben einer Reinigungsvorrichtung vorgeschlagen. Die Reinigungsvorrichtung umfasst eine Aufnahmevorrichtung zum Aufnehmen von Verschmutzungsobjekten, eine Antriebseinrichtung zum Bewegen der Reinigungsvorrichtung und eine Steuerungsvorrichtung zum Ansteuern der Antriebseinrichtung zum Lenken einer Bewegung der Reinigungsvorrichtung in Abhängigkeit von von einer Sensorik bereitgestellten Sensorsignalen. In einem ersten Schritt werden in einem vorgegebenen Bereich angeordnete Verschmutzungsobjekte durch eine Erfassungseinheit erfasst. In einem zweiten Schritt wird jedes der erfassten Verschmutzungsobjekte in eine jeweilige Verschmutzungsklasse einer Anzahl unterschiedlicher Verschmutzungsklassen klassifiziert. In einem dritten Schritt wird eine optimierte Bahn in Abhängigkeit einer jeweiligen Position der erfassten Verschmutzungsobjekte und der jeweiligen Verschmutzungsklasse der Verschmutzungsobjekte ermittelt. In einem vierten Schritt wird eine Reinigungsfahrt der Reinigungsvorrichtung entlang der ermitteln optimierten Bahn von der Steuerungsvorrichtung durchgeführt.

Dieses Verfahren weist insbesondere den Vorteil auf, dass die Reinigungsvorrichtung eine schnelle und effiziente Reinigung eines vorgegebenen Bereichs durchführen kann.

Die für die vorgeschlagene Reinigungsvorrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Seitenansicht eines Ausführungsbeispiels einer Reinigungsvorrichtung;
- Fig. 2: zeigt schematisch ein erstes Ausführungsbeispiel für eine Reinigungsfahrt entlang einer optimierten Bahn;
- Fig. 3A: zeigt ein Ausführungsbeispiel einer Liste klassifizierter Verschmutzungsobjekte;
- Fig. 3B: zeigt ein erstes Ausführungsbeispiel einer Liste von Verschmutzungsobjektvektoren;
- Fig. 4: zeigt ein zweites Ausführungsbeispiel für eine Reinigungsfahrt entlang einer optimierten Bahn;
- Fig. 5A: zeigt ein drittes Ausführungsbeispiel für eine Reinigungsfahrt entlang einer optimierten Bahn;
- Fig. 5B: zeigt ein zweites Ausführungsbeispiel für eine Liste von Verschmutzungsobjektvektoren;
- Fig. 6: zeigt ein viertes Ausführungsbeispiel für eine Reinigungsfahrt entlang einer optimierten Bahn; und
- Fig. 7: zeigt ein schematisches Blockdiagramm eines Ausführungsbeispiels für ein Verfahren zum Betreiben einer Reinigungsvorrichtung.

In den Figuren sind gleiche oder funktionsgleiche Elemente mit denselben Bezugszeichen versehen worden, sofern nichts anderes angegeben ist.

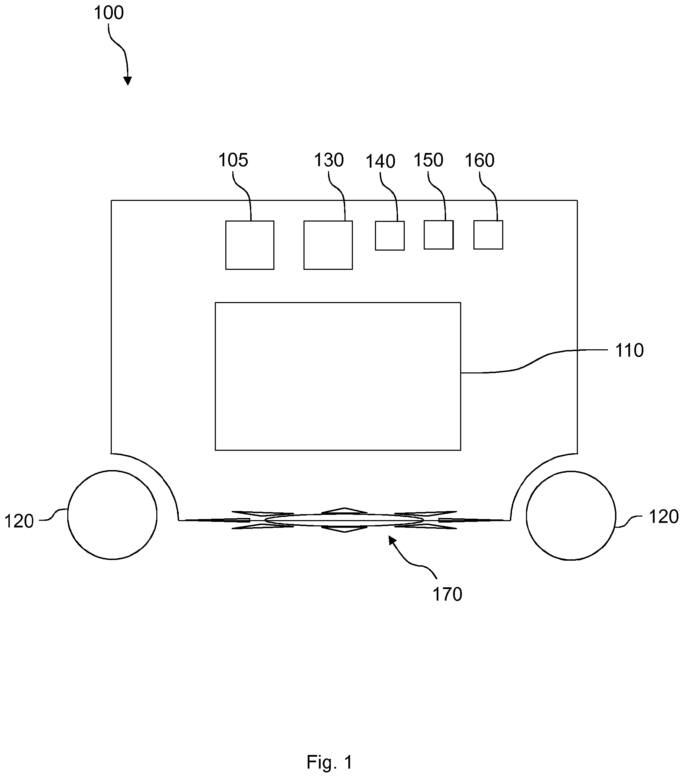

Fig. 1 zeigt eine schematische Seitenansicht eines Ausführungsbeispiels einer Reinigungsvorrichtung 100, die hier als eine Kehrmaschine ausgebildet ist. Die Kehrmaschine 100 ist als ein autonomes elektrisches Fahrzeug ausgebildet und weist zwei Antriebseinrichtungen 120 auf, die als durch Elektromotoren (nicht gezeigt) angetriebene und lenkbare Räder ausgebildet sind. Die Kehrmaschine 100 weist eine als Aufnahmeraum ausgebildete Aufnahmevorrichtung 110 zum Aufnehmen von Kehricht auf. Alternativ hierzu könnte die Aufnahmevorrichtung 110 auch als eine Zuführvorrichtung ausgebildet sein, wobei beispielsweise ein Rollcontainer an die Reinigungsvorrichtung 100 angekoppelt wird, in welchen Verschmutzungsobjekte O zugeführt werden (nicht dargestellt). Ferner weist die Kehrmaschine Sensorik 105 auf, die eine Anzahl unterschiedlicher Sensoren umfasst, die hier nicht einzeln dargestellt sind. Die Sensoren der Sensorik 105 umfassen eine visuelle Kamera auf jeder Seite der Kehrmaschine 100, Radar-Abstandsensoren die gleichmäßig entlang einem Umfang der Kehrmaschine 100 angeordnet sind, außerdem Infrarotkameras sowie ein GPS-Modul zum Erfassen einer Absolutposition der Kehrmaschine 100. Die Sensorik 105 erfasst von jedem dieser Sensoren ein Sensorsignal und gibt dieses, falls erwünscht, in aufbereiteter und/oder vorverarbeiteter Form an die Steuerungsvorrichtung 130 aus.

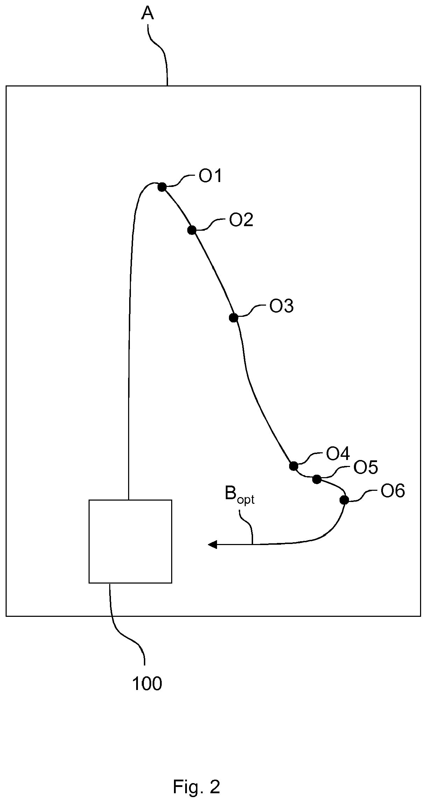

Die Kehrmaschine 100 wird durch eine als ein Mikroprozessor implementierte Steuerungsvorrichtung 130 gesteuert. Der Mikroprozessor 130 ist dazu eingerichtet, von der Sensorik 105 das Sensorsignal zu erfassen und dieses verarbeiten und/oder zu analysieren. Ein Verarbeiten umfasst insbesondere eine Bildverarbeitung, eine Signalanalyse, eine Mustererkennung und/oder eine Frequenzanalyse des Sensorsignals oder der Sensorsignale. Der Mikroprozessor 130 kann hierfür auch ein neuronales Netzwerk aufweisen. Der Mikroprozessor 130 steuert insbesondere die Antriebseinrichtung 120 an, so dass sich die Kehrmaschine 100 entlang eines zuvor bestimmten Pfades, insbesondere einer optimierten Bahn Bₒₚₜ (siehe z.B. Fig. 2, 4, 5A und 6) bewegt.

Die Kehrmaschine 100 weist ferner eine Erfassungseinheit 140, eine Bewertungseinheit 150 und eine Bahnplanungseinheit 160 auf. Diese Einheiten 140, 150, 160 sind hier separat dargestellt, können aber auch Teil der Steuerungsvorrichtung 100 sein.

Die Erfassungseinheit 140 ist beispielsweise dazu eingerichtet, in Abhängigkeit von Sensorsignalen der Sensorik 105 sowie von weiteren, hier nicht dargestellten Sensoren, Verschmutzungsobjekte O (siehe z.B. Fig. 2, 4, 5A und 6) in einem vorgegebenen Bereich A zu erfassen.

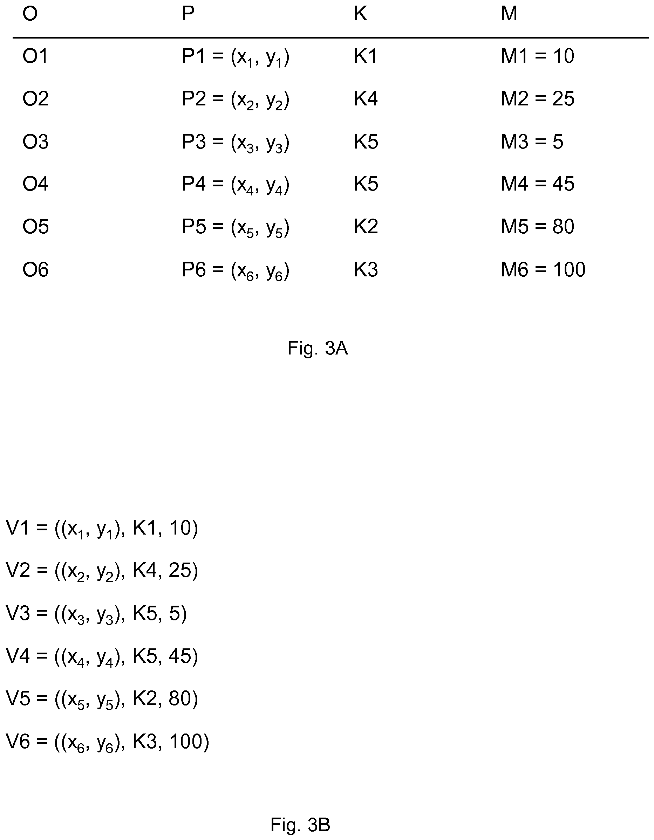

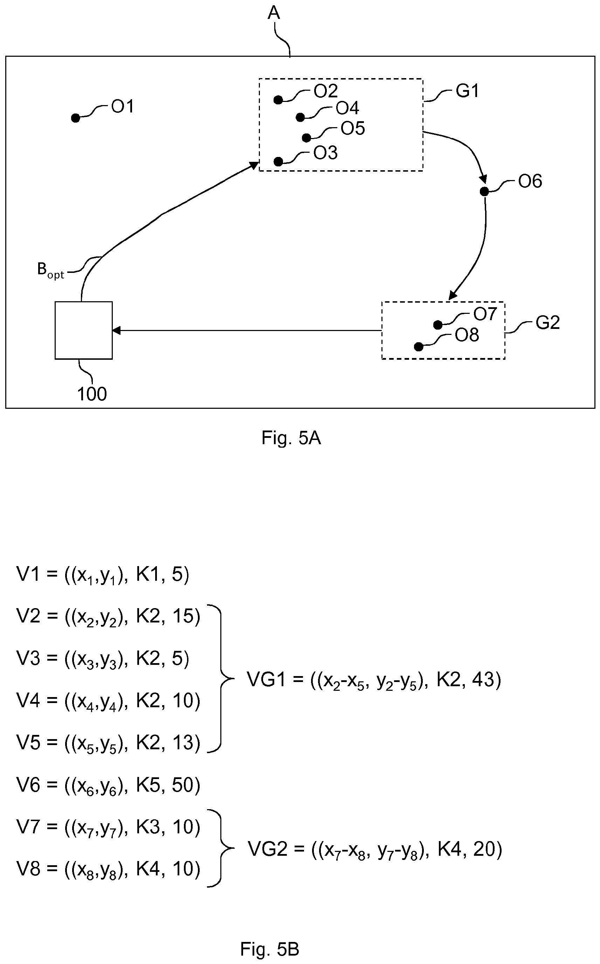

Die Bewertungseinheit 150 ist dazu eingerichtet, die erfassten Verschmutzungsobjekte O in Verschmutzungsklassen K (siehe z.B. Fig. 3A, 3B, 5A, 5B) zu Klassifizieren. Ein Verschmutzungsobjekt O wird dabei bevorzugt genau einer Verschmutzungsklasse K zugeordnet.

Die Erfassungseinheit 140 als auch die Bewertungseinheit 150 sind insbesondere als ein neuronales Netzwerk ausgebildet.

Die Bahnplanungseinheit 160 ist dazu eingerichtet, eine optimierte Bahn Bₒₚₜ zum Reinigen des vorgegebenen Bereichs A zu ermitteln. Dies erfolgt insbesondere in Abhängigkeit von Eigenschaften der Verschmutzungsobjekte O, insbesondere deren jeweilige Position P und Verschmutzungsklasse K.

Die Kehrmaschine 100 weist an ihrer Unterseite ein Werkzeug 170 auf, das hier als eine Kehrvorrichtung 170 ausgebildet ist. Die Kehrvorrichtung 170 ist dazu eingerichtet, losen Schmutz, Unrat und Kehricht von einer Oberfläche unter der Kehrmaschine 100 in den Aufnahmeraum 110 zu befördern. Die Kehrmaschine 100 kann ferner weitere Werkzeuge 170, die hier nicht dargestellt sind, umfassen.

Fig. 2 zeigt schematisch ein erstes Ausführungsbeispiel für eine Reinigungsfahrt entlang einer optimierten Bahn Bₒₚₜ innerhalb eines vorgegebenen Bereichs A. Die Reinigungsvorrichtung 100 ist in diesem Beispiel schematisch ohne weitere Details dargestellt. Es kann sich dabei beispielsweise um die in der Fig. 1 gezeigte Kehrmaschine 100 handeln.

Die Reinigungsvorrichtung 100 ist in einem linken unteren Eck des vorgegebenen Bereichs A angeordnet. Der vorgegebene Bereich A ist beispielsweise eine Teilfläche eines öffentlichen Platzes, den zu reinigen die Reinigungsvorrichtung 100 gestartet wurde. In dem vorgegebenen Bereich A befinden sich sechs Verschmutzungsobjekte O1 - O6.

Die Reinigungsvorrichtung 100 erfasst in diesem Beispiel den gesamten vorgegebenen Bereich A auf einmal. Man kann auch sagen, die Reinigungsvorrichtung 100 scannt den vorgegebenen Bereich A ab. Dabei erfasst die Erfassungseinheit 140 (siehe Fig. 1) die sechs Verschmutzungsobjekte O1 - O6. Die Bewertungseinheit 150 klassifiziert die erfassten Verschmutzungsobjekte O1 - O6 in Verschmutzungsklassen K (siehe Fig. 3A, 3B). Vorliegend handelt sich beispielsweise um Papiermüll. Die sechs Verschmutzungsobjekte O1 - O6 werden daher alle der gleichen Verschmutzungsklasse K zugeordnet (nicht dargestellt). Die Bahnplanungseinheit 160 ermittelt nun eine optimierte Bahn Bₒₚₜ, entlang welcher die Reinigungsmaschine 100 die sechs Verschmutzungsobjekte O1 - O6 möglichst effizient entfernen kann.

Die optimierte Bahn Bₒₚₜ umfasst hierbei alle sechs Verschmutzungsobjekte O1 - O6 und verbindet diese mit einem möglichst kurzen Pfad. Diese optimierte Bahn Bₒₚₜ ist im Vergleich zu einer flächenoptimierten Bahn (nicht dargestellt), die den gesamten vorgegebenen Bereich A erfassen würde, dahingehend optimiert, dass eine Zeitdauer, die die Reinigungsvorrichtung 100 zum Reinigen der vorgegebenen Fläche A benötigt, reduziert ist. Die optimierte Bahn Bₒₚₜ für die Reinigung des vorgegebenen Bereichs A weist beispielsweise nur etwa 10 - 20% der Länge einer flächenoptimierten Bahn für den vorgegebenen Bereich A auf. Dementsprechend schneller kann die Reinigung beendet werden. Es ergeben sich hieraus weitere Vorteile gegenüber einem herkömmlichen Bahnplanungsverfahren, beispielsweise können Emissionen reduziert, ein Energieverbrauch der Reinigungsvorrichtung 100 kann reduziert und ein Verschleiß von Werkzeugen 170 kann ebenfalls reduziert werden.

Fig. 3A zeigt ein Ausführungsbeispiel einer in einer Tabelle angeordneten Liste erfasster und klassifizierter Verschmutzungsobjekte O1 - O6. Die Liste umfasst für jedes der erfassten Verschmutzungsobjekte O1 - O6 eine Position P, die hier beispielsweise als zweidimensionale Koordinaten (x, y) definiert ist, eine zugeordnete Verschmutzungsklasse K einer Anzahl von Verschmutzungsklassen K1 - K5 sowie eine individuelle Menge M, M1 - M6, die beispielsweise ein ungefähres Volumen des jeweiligen Verschmutzungsobjekts O1 - O6 repräsentiert.

Fig. 3B zeigt ein erstes Ausführungsbeispiel einer Liste von Verschmutzungsobjektvektoren V1 - V6. Die Liste von Verschmutzungsobjektvektoren V1 - V6 wurde beispielsweise anhand der Tabelle der erfassten und klassifizierten Verschmutzungsobjekte O1 - O6 der Fig. 3A erstellt. Ein Verschmutzungsobjektvektor V1 - V6 weist dabei als ersten Eintrag die Position P1 - P6 eines jeweiligen Verschmutzungsobjekts O1 - O6 auf. Die Position P1 der ersten Verschmutzungsobjekt O1 besteht beispielsweise aus den Koordinaten (x₁, y₁). Als zweiten Eintrag enthält der Verschmutzungsobjektvektor V1 - V6 die jeweilige zugeordnete Verschmutzungsklasse K, für das erste Verschmutzungsobjekt O1 beispielsweise die Verschmutzungsklasse K1. Als dritten Eintrag enthält der Verschmutzungsobjektvektor V1 - V6 die jeweilige Menge M der Verschmutzung, für das erste Verschmutzungsobjekt O1 ist M1 = 10.

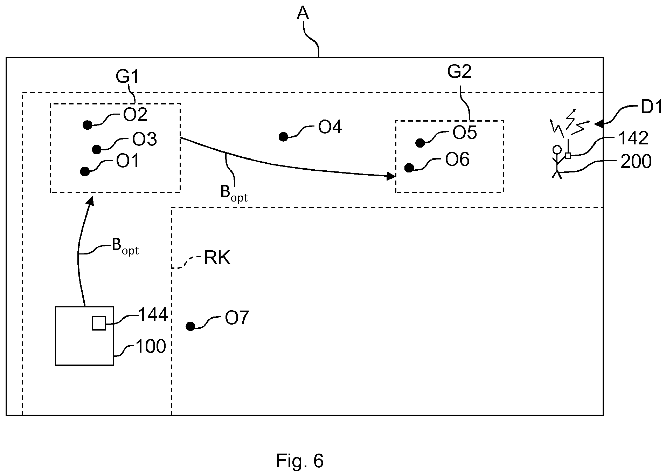

Auf Basis ihres jeweiligen Verschmutzungsobjektvektors V1 - V6 lassen sich Verschmutzungsobjekte O1 - O6 besonders einfach und schnell analysieren. Beispielsweise lassen sich anhand der individuellen Positionen P1 - P6 der Verschmutzungsobjekte O1 - O6 deren relative Abstände zueinander ermitteln und Verschmutzungsobjekte O1 - O6, die dicht beieinander liegen, in Gruppen G1, G2 (siehe Fig. 5A, 6) zusammenfassen. Ferner lässt sich beispielsweise jeder der Verschmutzungsklassen K, K1 - K5 eine Gewichtung zuordnen, wobei beispielsweise ein Produkt aus der Gewichtung mit der jeweiligen Menge eines Verschmutzungsobjekts O1 - O6 ein Gesamtgewicht für das jeweilige Verschmutzungsobjekt O1 - O6 ergibt. Das Gesamtgewicht eines Verschmutzungsobjekts O1 - O6 spiegelt beispielsweise eine Wichtigkeit oder eine Priorität wider, mit der das Verschmutzungsobjekt O1 - O6 in der Bahnplanung berücksichtigt wird.

Der hier dargelegte beispielhafte Aufbau der Verschmutzungsobjektvektoren V1 - V6 ist absichtlich einfach gehalten. In der Anwendung kann ein jeweiliger Verschmutzungsobjektvektor V1 - V6 viele weitere und/oder differenziertere Angaben über ein jeweiliges Verschmutzungsobjekt O1 - O6 aufweisen und die Verarbeitung der Verschmutzungsobjektvektoren V1 - V6 im Zuge der Ermittlung einer optimierten bahn Bₒₚₜ kann auf eine komplexe Weise erfolgen.

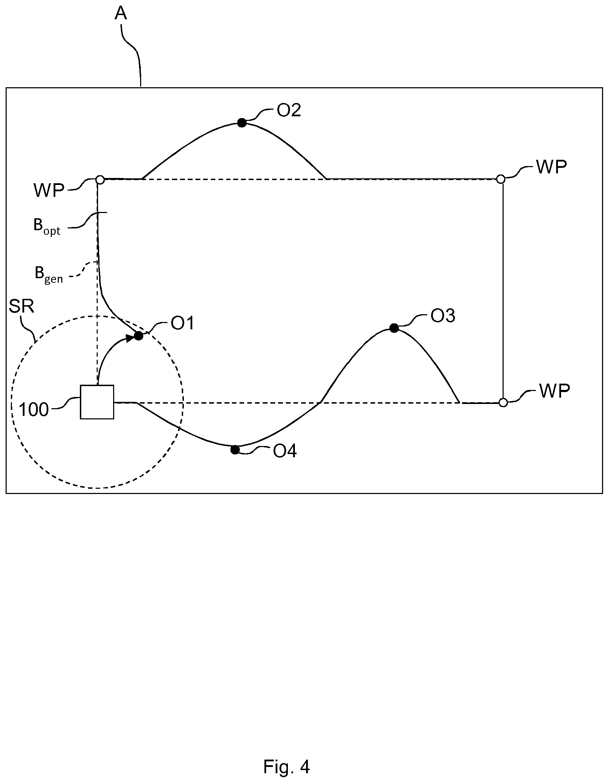

Fig. 4 zeigt ein zweites Ausführungsbeispiel für eine Reinigungsfahrt entlang einer optimierten Bahn Bₒₚₜ. In diesem Beispiel weisen die Sensoren der Sensorik 105 zur Erfassung von Verschmutzungsobjekten O1 - O4 insbesondere einen begrenzten Erfassungsbereich SR auf. Die Reinigungsvorrichtung 100 wird in diesem Beispiel in einem vorgegebenen Bereich A eingesetzt, der deutlich größer als der Erfassungsbereich SR ist.

Die Reinigungsvorrichtung 100 ermittelt in Abhängigkeit des Erfassungsbereichs SR und des vorgegebenen Bereichs A zunächst mehrere Wegpunkte WP, die mit einer generischen Bahn B_{gen} (gestrichelt dargestellt) verbunden werden. Die Wegpunkte WP, und damit die generische Bahn B_{gen}, werden derart ermittelt, dass die Reinigungsvorrichtung 100 bei einer Fahrt entlang der generischen Bahn B_{gen} den gesamten vorgegebenen Bereich A einmal mit dem Erfassungsbereich SR erfasst. Das Ermitteln der Wegpunkte WP und der generischen Bahn B_{gen} erfolgt insbesondere unabhängig von etwaigen Verschmutzungsobjekten O1 - O4, die bereits erfasst sind.

Anschließend werden, sofern erfasste Verschmutzungsobjekte O1 - O4 bereits erfasst sind, diese berücksichtigt und eine optimierte Bahn Bₒₚₜ (als durchgezogene Linie dargestellt) ermittelt. In dem Beispiel befindet sich ein erstes Verschmutzungsobjekt O1 innerhalb des Erfassungsbereichs SR, welches daher bereits erfasst ist. Die Reinigungsvorrichtung 100 steuert daher gleich das erste Verschmutzungsobjekt O1 an. Nachdem sie dieses erreicht und erfolgreich aufgenommen hat, kehrt die Reinigungsvorrichtung 100 auf die generische Bahn B_{gen} zurück und folgt dieser bis zu dem ersten Wegpunkt WP. Da in diesem Abschnitt kein Verschmutzungsobjekt O1 - O4 angeordnet ist, ist dieser Abschnitt der generischen Bahn B_{gen} auch ein Abschnitt der optimierten Bahn Bₒₚₜ. An dem Wegpunkt WP wendet sich die Reinigungsvorrichtung 100 nach rechts und dem nächsten Wegpunkt WP zu. Kurz darauf kommt ein zweites Verschmutzungsobjekt O2 in den Erfassungsbereich SR. Sofort wird eine von der generischen Bahn B_{gen} abweichende optimierte Bahn Bₒₚₜ ermittelt. Die optimierte Bahn Bₒₚₜ führt die Reinigungsvorrichtung 100 über das zweite Verschmutzungsobjekt O2, das auf der generischen Bahn B_{gen} verpasst worden wäre, wobei die optimierte Bahn Bₒₚₜ nur wenig länger als die generische Bahn B_{gen} ist.

Auf diese Weise folgt die Reinigungsvorrichtung 100 der generischen Bahn B_{gen} entlang der Wegpunkte WP, bis ein Verschmutzungsobjekt O1 - O4 in den Erfassungsbereich SR gerät, woraufhin eine optimierte Bahn Bₒₚₜ unter Berücksichtigung der zu einem jeweiligen Zeitpunkt erfassten Verschmutzungsobjekte O1 - O4 ermittelt und abgefahren wird. In diesem Beispiel wird ersichtlich, dass die optimierte Bahn Bₒₚₜ dynamisch und jederzeit unter Berücksichtigung neuer Randbedingungen von der Bahnplanungseinheit 160 ermittelt wird.

Fig. 5A zeigt ein drittes Ausführungsbeispiel für eine Reinigungsfahrt entlang einer optimierten Bahn Bₒₚₜ. In diesem Beispiel sind wird sofort der gesamte vorgegebene Bereich A durch die Reinigungsvorrichtung 100 erfasst. Dabei werden insgesamt acht Verschmutzungsobjekte O1 - O8 erfasst.

Die Verschmutzungsobjekte O1 und O6 weisen einen größeren Abstand zu weiteren Verschmutzungsobjekten O auf und sind daher einzeln zu betrachten. Die Verschmutzungsobjekte O2 - O5 liegen dicht beieinander, weshalb diese als eine erste Gruppe G1 von Verschmutzungsobjekten O zusammengefasst werden. Ebenso werden die Verschmutzungsobjekte O7 und O8 als eine zweite Gruppe G2 zusammengefasst. Dies wird nun in Zusammenhang mit der Fig. 5B näher erläutert.

Fig. 5B zeigt ein zweites Ausführungsbeispiel für eine Liste von Verschmutzungsobjektvektoren V1 - V8, wobei mehrere der Verschmutzungsobjektvektoren V1 - V8 zu Gruppenvektoren VG1, VG2 zusammengefasst sind. Die Verschmutzungsobjektvektoren V1 - V8 stellen insbesondere die Situation nach dem Erfassen und Bewerten der Verschmutzungsobjekte O1 - O8 der Fig. 5A dar. Die Verschmutzungsobjekte O2 - O5 liegen dicht beieinander, weshalb diese anstelle von vier einzelnen Verschmutzungsobjektvektoren V2 - V5 in einem einen Gruppenvektor VG1 zusammengefasst sind. Dieser weist anstelle einer eindeutigen Position einen Bereich (x₂-x₅, y₂-y₅) auf, der die Positionen der in der Gruppe vertretenen Verschmutzungsobjekte O2 - O5 umfasst. Da alle vier Verschmutzungsobjekte O2 - O5 derselben Verschmutzungsklasse K2 zugeordnet sind, weist auch der Gruppenvektor VG1 die Verschmutzungsklasse K2 auf. Die Mengen der einzelnen Verschmutzungsobjekte O2 - O5 wurden zu einer Gesamtmenge addiert, so dass der Gruppenvektor VG1 insgesamt eine Menge von 23 aufweist.

Auch die Verschmutzungsobjekte O7 und O8 werden durch einen Gruppenvektor VG2 beschrieben, da diese ebenfalls dicht beieinanderliegen. Hierbei ist eine Besonderheit, dass der Gruppenvektor VG2 die Verschmutzungsklasse K4 aufweist, obwohl das Verschmutzungsobjekt O7 der Verschmutzungsklasse K3 zugeordnet wurde, wie dem Verschmutzungsobjektvektor V7 zu entnehmen ist. In diesem Beispiel ist die Verschmutzungsklasse K4 zum Beispiel spezieller als die Verschmutzungsklasse K3, wobei Verschmutzungsobjekte O der Verschmutzungsklasse K3 mit den Werkzeugen 170, die bei einem Verschmutzungsobjekt O der Verschmutzungsklasse K4 zur Behandlung eingesetzt werden, entfernbar ist, umgekehrt aber beispielsweise nicht. Deshalb wird die Verschmutzungsklasse K3 beim Erstellen des Gruppenvektors VG2 "überschrieben". Die Menge des Gruppenvektors VG2 entspricht auch hier der Summe der Einzelmengen. Es wäre auch denkbar, für unterschiedliche Verschmutzungsklassen K unterschiedliche Mengenmaße zu verwenden, die dann gegebenenfalls ineinander umgerechnet werden könnten, um die Menge eines Gruppenvektors VG2 umfassend Verschmutzungsvektoren V7, V8 mit unterschiedlichen Verschmutzungsklassen K zu ermitteln.

Die Bahnplanungseinheit 160 ermittelt nun in Abhängigkeit der in der Fig. 5B dargestellten Liste von Verschmutzungsobjektvektoren V1 - V8 umfassend die Gruppenvektoren VG1, VG2 die optimierte Bahn Bₒₚₜ. Das erste Verschmutzungsobjekt O1 wird nicht angesteuert, da es einer Verschmutzungsklasse K1 zugeordnet ist, die beispielsweise eine geringe Priorität hat und ferner eine geringe Menge von lediglich 5 aufweist. Daher ermittelt die Bahnplanungseinheit 160, dass es nicht effizient ist, das Verschmutzungsobjekt O1 anzusteuern. Stattdessen wird als erstes die Gruppe G1 mit den Verschmutzungsobjekten O2 - O5 angesteuert. Die Verschmutzungsobjekte O2 - O5 weisen jeweils die Verschmutzungsklasse K2 auf, die keine sehr hohe Gewichtung hat. Auch die jeweilige Menge der Verschmutzungsobjekte O2 - O5 ist für sich genommen nicht sehr hoch. Zusammengefasst als Gruppe G1 mit Gruppenvektor VG1 ist die Menge jedoch bedeutend größer, weshalb die Priorität ansteigt. Daher verläuft die durch die Bahnplanungseinheit 160 ermittelte optimierte Bahn Bₒₚₜ zunächst zu der Gruppe G1. Im Folgenden verläuft die optimierte Bahn Bₒₚₜ über das Verschmutzungsobjekt O6, welches eine hohe Gewichtung aufweist, und über die Gruppe G2 zurück zum Ausgangspunkt der Reinigungsfahrt.

Alternativ zu der gezeigten optimierten Bahn Bₒₚₜ könnte diese auch in der umgekehrten Richtung verlaufen und/oder auch das Verschmutzungsobjekt O1 umfassen. Hierbei hängt es von einer Implementierung der Bahnplanungseinheit 160 und den Vorgaben zur Optimierung ab, welchen Verlauf die optimierte Bahn Bₒₚₜ letztlich aufweist.

Fig. 6 zeigt ein viertes Ausführungsbeispiel für eine Reinigungsfahrt entlang einer optimierten Bahn Bₒₚₜ. Bei diesem Ausführungsbeispiel weist die Erfassungseinheit 140 unter anderem ein abkoppelbares Feldgerät 142 und eine Empfangseinheit 144 auf. Beispielsweise entnimmt ein Arbeiter 200 das Feldgerät 142. Der Arbeiter 200 bewegt sich dann entlang eines Reinigungskorridors RK, der für die Reinigungsvorrichtung 100 einen zu reinigenden Teilbereich des vorgegebenen Bereichs A festlegt. Während der Arbeiter 200 den Reinigungskorridor abschreitet, kann er mittels des Feldgeräts 142 Verschmutzungsobjekte O1-O7 markieren. In diesem Beispiel markiert der Arbeiter 200 das Verschmutzungsobjekt O4 insbesondere als nicht zu entfernendes Verschmutzungsobjekt, beispielsweise weil die Reinigungsvorrichtung 100 das hierfür benötigte Werkzeug 170 (siehe z.B. Fig. 1) nicht an Bord hat.

Die Reinigungsvorrichtung 100 dieses Beispiels befindet sich beispielsweise in einem teilautonomen Betriebsmodus. Das Erfassen der Verschmutzungsobjekte O1 - O7 obliegt hierbei dem Arbeiter 200. Insbesondere kann der Arbeiter 200 mit dem Feldgerät 142 nicht nur die Position eines Verschmutzungsobjekts, sondern auch dessen Klassifizierung und/oder Mengenbestimmung vornehmen und mittels einer Information DI von dem Feldgerät 142 an die Empfangseinheit 144 der Erfassungseinheit 140 übertragen. Die Information DI wird insbesondere als ein digitales Datensignal übertragen und kann beispielsweise in Form eines Verschmutzungsobjektvektors V ausgebildet sein. In Abhängigkeit der von dem Feldgerät 142 empfangenen Informationen DI und dem durch den Arbeiter 200 vorgegebenen Reinigungskorridor RK ermittelt die Bahnplanungseinheit 160 eine optimierte Bah Bₒₚₜ. Hierbei kann die Reinigungsvorrichtung 100 auch über ihre interne Sensorik 105 und/oder Erfassungseinheit 140 erfasste Informationen über die Verschmutzungsobjekte O1 - O7 berücksichtigen. In diesem Beispiel werden die Verschmutzungsobjekte O1 - O3 zu einer Gruppe G1 zusammengefasst und die Verschmutzungsobjekte O5, O6 werden zu einer Gruppe G2 zusammengefasst.

Das Verschmutzungsobjekt O7 liegt außerhalb des Reinigungskorridors RK, weshalb es bei der Bahnplanung nicht berücksichtigt wird. Das Verschmutzungsobjekt O4 wurde durch den Arbeiter 200 von der Entfernung ausgenommen, wobei die Reinigungsvorrichtung 100 dies insofern berücksichtigt, als die optimierte Bahn Bₒₚₜ das Verschmutzungsobjekt O4 meiden sollte. Demnach steuert die Reinigungsvorrichtung 100 auf der optimierten Bahn Bₒₚₜ zunächst die Gruppe G1 an und entfernt die Verschmutzungsobjekte O1 - O3. Danach wendet sich die Reinigungsvorrichtung 100 der Gruppe G2 zu, wobei die optimierte Bahn Bₒₚₜ deutlich an dem Verschmutzungsobjekt O4 vorbeiführt.

In diesem Ausführungsbeispiel hat der Arbeiter 200 die Reinigungsvorrichtung 100 teilweise gesteuert, indem er durch seine Bewegung den Reinigungskorridor RK für die Reinigungsvorrichtung 100 festgelegt hat und indem er Verschmutzungsobjekte O1 - O6 markiert hat. Die Reinigungsvorrichtung 100 ermittelt jedoch selbstständig die optimierte Bahn Bₒₚₜ und auch, in welcher Reihenfolge und/oder mit welchem Werkzeug 170 ein jeweiliges Verschmutzungsobjekt O1-O6 behandelt werden soll.

Es kann von einem teilautonomen Betrieb der Reinigungsvorrichtung gesprochen werden. Der Betriebsmodus kann jedoch auch als vollautonomer Betriebsmodus betrachtet werden, bei dem harte Einschränkungen durch den Arbeiter 200 in Echtzeit vorgenommen werden, wie beispielsweise das Festlegen des Reinigungskorridors RK und das Ausnehmen des Verschmutzungsobjekts O4 aus der Reinigungsfahrt.

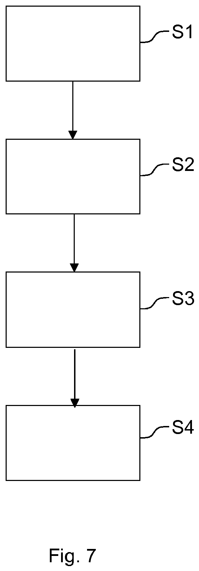

Fig. 7 zeigt ein schematisches Blockdiagramm eines Ausführungsbeispiels für ein Verfahren zum Betreiben einer Reinigungsvorrichtung 100, beispielsweise der Kehrmaschine 100 der Fig. 1.

In einem ersten Schritt S1 werden in einem vorgegebenen Bereich A (siehe Fig. 2, 4, 5A, 6) angeordnete Verschmutzungsobjekte O durch eine Erfassungseinheit 140 (siehe Fig. 1) erfasst. In einem zweiten Schritt S2 wird jedes der erfassten Verschmutzungsobjekte O in eine jeweilige Verschmutzungsklasse K einer Anzahl unterschiedlicher Verschmutzungsklassen K1 - K5 klassifiziert. In einem dritten Schritt S3 wird eine optimierte Bahn Bₒₚₜ in Abhängigkeit einer jeweiligen Position P der erfassten Verschmutzungsobjekte O und der jeweiligen Verschmutzungsklasse K der Verschmutzungsobjekte O ermittelt. In einem vierten Schritt S4 führt die Steuerungsvorrichtung 130 eine Reinigungsfahrt mit der Reinigungsvorrichtung 100 entlang der ermitteln optimierten Bahn Bₒₚₜ durch.

Obwohl die vorliegende Erfindung anhand von Ausführungsbeispielen beschrieben wurde, ist sie vielfältig modifizierbar.

### BEZUGSZEICHENLISTE

- 100: Reinigungsvorrichtung
- 105: Sensorik
- 110: Aufnahmevorrichtung
- 120: Antriebseinrichtung
- 130: Steuerungsvorrichtung
- 140: Erfassungseinheit
- 142: Feldgerät
- 144: Empfangseinheit
- 150: Bewertungseinheit
- 160: Bahnplanungseinheit
- 170: Werkzeug
- 200: Arbeiter

- A: Fläche
- B_{gen}: generische Bahn
- Bₒₚₜ: optimierte Bahn
- DI: Information
- K: Verschmutzungsklasse
- K1: Verschmutzungsklasse
- K2: Verschmutzungsklasse
- K3: Verschmutzungsklasse
- K4: Verschmutzungsklasse
- K5: Verschmutzungsklasse
- M: Menge
- O: Verschmutzungsobjekt
- O1: Verschmutzungsobjekt
- O2: Verschmutzungsobjekt
- O3: Verschmutzungsobjekt
- O4: Verschmutzungsobjekt
- O5: Verschmutzungsobjekt
- O6: Verschmutzungsobjekt
- O7: Verschmutzungsobjekt
- O8: Verschmutzungsobjekt
- P: Position
- P1: Position
- P2: Position
- P3: Position
- P4: Position
- P5: Position
- P6: Position
- RK: Reinigungskorridor
- SR: Erfassungsradius
- V1: Verschmutzungsobjektvektor
- V2: Verschmutzungsobjektvektor
- V3: Verschmutzungsobjektvektor
- V4: Verschmutzungsobjektvektor
- V5: Verschmutzungsobjektvektor
- V6: Verschmutzungsobjektvektor
- V7: Verschmutzungsobjektvektor
- V8: Verschmutzungsobjektvektor
- VG1: Gruppenvektor
- VG2: Gruppenvektor
- WP: Wegpunkt
- x₁: X-Position
- x₂: X-Position
- x₃: X-Position
- x₄: X-Position
- x₅: X-Position
- x₆: X-Position
- x₇: X-Position
- x₈: X-Position
- y₁: Y-Position
- y₂: Y-Position
- y₃: Y-Position
- y₄: Y-Position
- y₅: Y-Position
- y₆: Y-Position
- y₇: Y-Position
- y₈: Y-Position

## Patentansprüche

1. Reinigungsvorrichtung (100) mit einer Aufnahmevorrichtung (110) zum Aufnehmen von Verschmutzungsobjekten (O, O1 - O8), einer Antriebseinrichtung (120) zum Bewegen der Reinigungsvorrichtung (100), einer Steuerungsvorrichtung (130) zum Ansteuern der Antriebseinrichtung (120) zum Lenken einer Bewegung der Reinigungsvorrichtung (100) in Abhängigkeit von von einer Sensorik (105) bereitgestellten Sensorsignalen, mit
einer Erfassungseinheit (140) zum Erfassen von in einem vorgebbaren Bereich (A) angeordneten Verschmutzungsobjekten (O, O1 - O8),
einer Bewertungseinheit (150) zum Klassifizieren der von der Erfassungseinheit (140) erfassten Verschmutzungsobjekte (O, O1 - O8) in unterschiedliche Verschmutzungsklassen (K, K1 - K5), und
einer Bahnplanungseinheit (160) zum Ermitteln einer optimierten Bahn (Bₒₚₜ) für die Reinigungsvorrichtung (100) in dem vorgegebenen Bereich (A) in Abhängigkeit einer jeweiligen Position (P, P1 - P6) der erfassten Verschmutzungsobjekte (O, O1 - O8) und der jeweiligen Verschmutzungsklasse (K, K1 - K5) der Verschmutzungsobjekte (O, O1 - O8),
wobei die Steuerungsvorrichtung (130) dazu eingerichtet ist, die Antriebseinrichtung (120) zum Durchführen einer Reinigungsfahrt entlang der ermittelten optimierten Bahn (Bₒₚₜ) anzusteuern.

2. Reinigungsvorrichtung nach Anspruch 1,
**dadurch gekennzeichnet,**
**dass** die Erfassungseinheit (140) dazu eingerichtet ist, jedem erfassten Verschmutzungsobjekt (O, O1 - O8) einen Verschmutzungsobjektsvektor (V1 - V10) zuzuordnen, der die Position (P, P1 - P6) des erfassten Verschmutzungsobjekts (O, O1 - O8), einen Typ des erfassten Verschmutzungsobjekts (O, O1 - O8) und/oder eine Menge (M, M1 - M6) des erfassten Verschmutzungsobjekts (O, O1 - O8) umfasst.

3. Reinigungsvorrichtung nach Anspruch 2,
**dadurch gekennzeichnet,**
**dass** die Bewertungseinheit (150) dazu eingerichtet ist, ein erfasstes Verschmutzungsobjekt (O, O1 - O8) in Abhängigkeit des zugeordneten Verschmutzungsobjektsvektors (V1 - V8) zu klassifizieren.

4. Reinigungsvorrichtung nach einem der Ansprüche 1 - 3,
**dadurch gekennzeichnet,**
**dass** die Erfassungseinheit (140) ein von der Reinigungsvorrichtung (100) abkoppelbares Feldgerät (142) und eine Empfangseinheit (144) umfasst, wobei das Feldgerät (142) zum Erfassen zumindest eines der Verschmutzungsobjekte (O, O1 - O8) und zum Übertragen einer für das erfasste Verschmutzungsobjekt (O, O1 - O8) indikativen Information (DI) an die Empfangseinheit (144) eingerichtet ist.

5. Reinigungsvorrichtung nach einem der Ansprüche 1 - 4,
**dadurch gekennzeichnet,**
**dass** die Reinigungsvorrichtung (100) eine Mehrzahl an Werkzeugen (170) zum Behandeln von Verschmutzungsobjekten (O, O1 - O8) aufweist, welche durch die Steuerungsvorrichtung (130) selektiv ansteuerbar sind, wobei ein jeweiliges Werkzeug (170) zum Behandeln von Verschmutzungsobjekten (O, O1 - O8) einer bestimmten Verschmutzungsklasse (K, K1 - K5) optimiert ist.

6. Reinigungsvorrichtung nach Anspruch 5,
**dadurch gekennzeichnet,**
**dass** die Steuerungsvorrichtung (130) dazu eingerichtet ist, wenn die Reinigungsvorrichtung (100) ein Verschmutzungsobjekt (O, O1 - O8) erreicht, in Abhängigkeit der Verschmutzungsklasse (K, K1 - K5) des erreichten Verschmutzungsobjekts (O, O1 - O8) das für diese Verschmutzungsklasse (K, K1 - K5) optimierte Werkzeug (170) zum Behandeln des Verschmutzungsobjekts (O, O1 - O8) anzusteuern.

7. Reinigungsvorrichtung nach einem der Ansprüche 1 - 6,
**dadurch gekennzeichnet,**
**dass** die Bahnplanungseinheit (160) dazu eingerichtet ist, die optimierte Bahn (Bₒₚₜ) in Abhängigkeit von zeitlich veränderlichen Bedingungen dynamisch zu aktualisieren.

8. Reinigungsvorrichtung nach einem der Ansprüche 1 - 7,
**dadurch gekennzeichnet,**
**dass** die Reinigungsvorrichtung (100) eine Überprüfungseinheit aufweist, welche dazu eingerichtet ist, nach dem Behandeln eines Verschmutzungsobjekts (O, O1 - O8) einen Erfolg des Behandelns des Verschmutzungsobjekts (O, O1 - O8) in Abhängigkeit eines Entfernens des Verschmutzungsobjekts (O, O1 - O8) zu ermitteln.

9. Reinigungsvorrichtung nach Anspruch 8,
**dadurch gekennzeichnet,**
**dass** die Steuerungsvorrichtung (130) dazu eingerichtet ist, in Abhängigkeit des Erfolgs des Behandelns das Verschmutzungsobjekt (O, O1 - O8) erneut zu behandeln.

10. Reinigungsvorrichtung nach einem der Ansprüche 1 - 9,
**dadurch gekennzeichnet,**
**dass** die Bahnplanungseinheit (160) dazu eingerichtet ist mehrere Verschmutzungsobjekte (O, O1 - O8) zu einer Gruppe (G1, G2) von Verschmutzungsobjekten zusammenzufassen und die optimierte Bahn (Bₒₚₜ) in Abhängigkeit der Gruppe (G1, G2) zu ermitteln.

11. Reinigungsvorrichtung nach einem der Ansprüche 1 - 10,
**dadurch gekennzeichnet,**
**dass** die Reinigungsvorrichtung (100) zum autonomen Reinigen des vorgebbaren Bereichs (A) eingerichtet ist.

12. Reinigungsvorrichtung nach einem der Ansprüche 1 - 11,
**dadurch gekennzeichnet,**
**dass** die Reinigungsvorrichtung (100) ein Reinigungsroboter, eine Straßenreinigungsmaschine, eine Kehrmaschine oder eine Oberflächenbehandlungsmaschine ist.

13. Verfahren zum Betreiben einer Reinigungsvorrichtung (100) umfassend eine Aufnahmevorrichtung (110) zum Aufnehmen von Verschmutzungsobjekten (O1 - O8), eine Antriebseinrichtung (120) zum Bewegen der Reinigungsvorrichtung (100), eine Steuerungsvorrichtung (130) zum Ansteuern der Antriebseinrichtung (120) zum Lenken einer Bewegung der Reinigungsvorrichtung (100) in Abhängigkeit von von einer Sensorik (105) bereitgestellten Sensorsignalen, mit:
Erfassen (S1) von in einem vorgegebenen Bereich (A) angeordneten Verschmutzungsobjekten (O, O1 - O8) durch eine Erfassungseinheit (140),
Klassifizieren (S2) jedes erfassten Verschmutzungsobjekts (O, O1 - O8) in eine Verschmutzungsklasse (K, K1 - K5) einer Anzahl unterschiedlicher Verschmutzungsklassen (K, K1 - K5),
Ermitteln (S3) einer optimierten Bahn (Bopt) in Abhängigkeit einer jeweiligen Position (P, P1 - P6) der erfassten Verschmutzungsobjekte (O, O1 - O8) und der jeweiligen Verschmutzungsklasse (K, K1 - K5) der Verschmutzungsobjekte (O, O1 - O8), und
Durchführen (S4) einer Reinigungsfahrt mit der Reinigungsvorrichtung (100) entlang der ermitteln optimierten Bahn (Bₒₚₜ) durch die Steuerungsvorrichtung (130).

14. Computerprogrammprodukt, welches auf einer programmgesteuerten Vorrichtung die Ausführung des Verfahrens nach Anspruch 13 veranlasst.

## Claims

1. Cleaning apparatus (100) having a housing device (110) for housing dirty objects (O, O1 - O8), a drive device (120) for moving the cleaning apparatus (100), a control device (130) for controlling the drive device (120) for steering a movement of the cleaning apparatus (100) in dependence on sensor signals provided by a sensor system (105), comprising:
a detection unit (140) for detecting dirty objects (O, O1 - O8) arranged in a predefinable area (A),
an evaluation unit (150) for classifying the dirty objects (O, O1 - O8) detected by the detection unit (140) into different dirty classes (K, K1 - K5), and
a track planning unit (160) for determining an optimized track (Bₒₚₜ) for the cleaning apparatus (100) in the predefined area (A) in dependence on a respective position (P, P1 - P6) of the detected dirty objects (O, O1 - O8) and the respective dirty class (K, K1 - K5) of the dirty objects (O, O1 - O8),
wherein the control device (130) is configured to control the drive device (120) for performing a cleaning ride along the determined optimized track (Bₒₚₜ).

2. Cleaning apparatus according to claim 1,
**characterized in**
**that** the detection unit (140) is configured to assign a dirty object vector (V1 - V10) to each detected dirty object (O, O1 - O8) which comprises the position (P, P1 - P6) of the detected dirty object (O, O1 - O8), a type of the detected dirty object (O, O1 - O8) and/or an amount (M, M1 - M6) of the detected dirty object (O, O1 - O8).

3. Cleaning apparatus according to claim 2,
**characterized in**
**that** the evaluation unit (150) is configured to classify a detected dirty object (O, O1 - O8) in dependence on the assigned dirty object vector (V1 - V8).

4. Cleaning apparatus according to one of claims 1 - 3,
**characterized in**
**that** the detection unit (140) comprises a field device (142) that can be decoupled from the cleaning apparatus (100) and a receiving unit (144), wherein the field device (142) is configured for detecting at least one of the dirty objects (O, O1 - O8) and for transmitting an information (DI) indicative for the detected dirty object (O, O1 - O8) to the receiving unit (144).

5. Cleaning apparatus according to one of claims 1 - 4,
**characterized in**
**that** the cleaning apparatus (100) has a plurality of tools (170) for handling dirty objects (O, O1 - O8), which are selectively controllable by the control device (130), wherein a respective tool (170) is optimized for handling dirty objects (O, O1 - O8) of a specific dirty class (K, K1 - K5).

6. Cleaning apparatus according to claim 5,
**characterized in**
**that** the control device (130) is configured, when the cleaning apparatus (100) reaches a dirty object (O, O1 - O8), to control, in dependence on the dirty class (K, K1 - K5) of the reached dirty object (O, O1 - O8), that tool (170) which is optimized for this dirty class (K, K1 - K5) for handling the dirty object (O, O1 - O8).

7. Cleaning apparatus according to one of claims 1 - 6,
**characterized in**
**that** the track planning unit (160) is configured to dynamically update the optimized track (Bₒₚₜ) in dependence on time-varying conditions.

8. Cleaning apparatus according to one of claims 1 - 7,
**characterized in**
**that** the cleaning apparatus (100) has a verification unit, which is configured, after the handling of a dirty object (O, O1 - O8), to determine a success of the handling of the dirty object (O, O1 - O8) in dependence on a removal of the dirty object (O, O1 - O8).

9. Cleaning apparatus according to claim 8,
**characterized in**
**that** the control device (130) is configured to handle the dirty object (O, O1 - O8) again in dependence on the success of the handling.

10. Cleaning apparatus according to one of claims 1 - 9,
**characterized in**
**that** the track planning unit (160) is configured to integrate multiple dirty objects (O, O1 - O8) into one group (G1, G2) of dirty objects and to determine the optimized track (Bₒₚₜ) in dependence on the group (G1, G2).

11. Cleaning apparatus according to one of claims 1 - 10,
**characterized in**
**that** the cleaning apparatus (100) is configured for autonomous cleaning of the predefinable area (A).

12. Cleaning apparatus according to one of the claims 1 - 11,
**characterized in**
**that** the cleaning apparatus (100) is a cleaning robot, a road cleaning machine, a sweeping machine or a surface handling machine.

13. Method for operating a cleaning apparatus (100) comprising a housing device (110) for housing dirty objects (O1 - O8), a drive device (120) for moving the cleaning apparatus (100), a control device (130) for controlling the drive device (120) for steering a movement of the cleaning apparatus (100) in dependence on sensor signals provided by a sensor system (105), comprising:
detecting (S1) dirty objects (O, O1 - O8) arranged in a predefined area (A) by a detection unit (140),
classifying (S2) each detected dirty object (O, O1 - O8) into a dirty class (K, K1 - K5) of a number of different dirty classes (K, K1 - K5),
determining (S3) an optimized track (Bₒₚₜ) in dependence on a respective position (P, P1 - P6) of the detected dirty objects (O, O1 - O8) and the respective dirty class (K, K1 - K5) of the dirty objects (O, O1 - O8), and
performing (S4) a cleaning ride with the cleaning apparatus (100) along the determined optimized track (Bₒₚₜ) by the control device (130).

14. Computer program product which initiates the execution of the method according to claim 13 on a program-controlled apparatus.

## Revendications

1. Appareil de nettoyage (100) comportant un dispositif boîtier (110) destiné à loger des objets sales (O, O1 à O8), un dispositif d'entraînement (120) destiné à déplacer l'appareil de nettoyage (100), un dispositif de commande (130) destiné à commander le dispositif d'entraînement (120) pour diriger un déplacement de l'appareil de nettoyage (100) en fonction de signaux de capteurs fournis par un système de capteurs (105), comprenant :
une unité de détection (140) destinée à détecter des objets sales (O, O1 à O8) disposés dans une zone pouvant être prédéfinie (A),
une unité d'évaluation (150) destinée à classifier les objets sales (O, O1 à O8) détectés par l'unité de détection (140) selon différentes classes de saleté (K, K1 à K5), et
une unité de programmation de trajet (170) destinée à déterminer un trajet optimisé (Bₒₚₜ) de l'appareil de nettoyage (100) dans la zone prédéfinie (A) en fonction d'une position respective (P, P1 à P6) des objets sales détectés (O, O1 à O8) et de la classe de saleté respective (K, K1 à K5) des objets sales (O, O1 à O8),
dans lequel le dispositif de commande (130) est configuré pour commander le dispositif d'entraînement (120) pour qu'il effectue un parcours de nettoyage le long du trajet optimisé déterminé (Bₒₚₜ).

2. Appareil de nettoyage selon la revendication 1,
**caractérisé en ce que**
l'unité de détection (140) est configurée pour attribuer un vecteur d'objet sale (V1 à V10) à chaque objet sale détecté (O, O1 à O8) qui comprend la position (P, P1 à P6) de l'objet sale détecté (O, O1 à O8), un type de l'objet sale détecté (O, O1 à O8) et/ou une quantité (M, M1 à M6) de l'objet sale détecté (O, O1 à O8).

3. Appareil de nettoyage selon la revendication 2,
**caractérisé en ce que**
l'unité d'évaluation (150) est configurée pour classifier un objet sale détecté (O, O1 à O8) en fonction du vecteur d'objet sale attribué (V1 à V8).

4. Appareil de nettoyage selon l'une des revendications 1 à 3,
**caractérisé en ce que**
l'unité de détection (140) comprend un dispositif sur site (142) qui peut être désaccouplé de l'appareil de nettoyage (100) et une unité de réception (144), dans lequel le dispositif sur site (142) est configuré pour détecter au moins l'un des objets sales (O, O1 à O8) et pour transmettre des informations (DI) indiquant l'objet sale détecté (O, O1 à O8) à l'unité de réception (144).

5. Appareil de nettoyage selon l'une des revendications 1 à 4,
**caractérisé en ce que**
l'appareil de nettoyage (100) comporte une pluralité d'outils (170) destinés à manipuler des objets sales (O, O1 à O8), qui peuvent être commandés de manière sélective par le dispositif de commande (130), dans lequel un outil respectif (170) est optimisé pour manipuler des objets sales (O, O1 à O8) d'une classe de saleté spécifique (K, K1 à K5).

6. Appareil de nettoyage selon la revendication 5,
**caractérisé en ce que**
le dispositif de commande (130) est configuré, lorsque l'appareil de nettoyage (100) atteint un objet sale (O, O1 à O8), pour commander, en fonction de la classe de saleté (K, K1 à K5) de l'objet sale atteint (O, O1 à O8), l'outil (170) qui est optimisé pour cette classe de saleté (K, K1 à K5) pour manipuler l'objet sale (O, O1 à O8).

7. Appareil de nettoyage selon l'une des revendications 1 à 6,
**caractérisé en ce que**
l'unité de programmation de trajet (160) est configurée pour mettre à jour de manière dynamique le trajet optimisé (Bₒₚₜ) en fonction de conditions qui varient dans le temps.

8. Appareil de nettoyage selon l'une des revendications 1 à 7,
**caractérisé en ce que**
l'appareil de nettoyage (100) comporte une unité de vérification, qui est configurée, après la manipulation d'un objet sale (O, O1 à O8), pour déterminer une réussite de la manipulation de l'objet sale (O, O1 à O8) en fonction d'un retrait de l'objet sale (O, O1 à O8).

9. Appareil de nettoyage selon la revendication 8,
**caractérisé en ce que**
le dispositif de commande (130) est configuré pour manipuler de nouveau l'objet sale (O, O1 à O8) en fonction de la réussite de la manipulation.

10. Appareil de nettoyage selon l'une des revendications 1 à 9,
**caractérisé en ce que**
l'unité de programmation de trajet (160) est configurée pour intégrer de multiples objets sales (O, O1 à O8) dans un groupe (G1, G2) d'objets sales et pour déterminer le trajet optimisé (Bₒₚₜ) en fonction du groupe (G1, G2).

11. Appareil de nettoyage selon l'une des revendications 1 à 10,
**caractérisé en ce que** ce
l'appareil de nettoyage (100) est configuré pour un nettoyage autonome de la zone pouvant être prédéfinie (A).

12. Appareil de nettoyage selon l'une des revendications 1 à 11,
**caractérisé en ce que**
l'appareil de nettoyage (100) est un robot de nettoyage, une machine de nettoyage de route, une machine de balayage ou une machine de traitement de surface.

13. Procédé de mise en œuvre d'un appareil de nettoyage (100) comprenant un dispositif boîtier (110) destiné à loger des objets sales (O1 à O8), un dispositif d'entraînement (120) destiné à déplacer l'appareil de nettoyage (100), un dispositif de commande (130) destiné à commander le dispositif d'entraînement (120) pour diriger un déplacement de l'appareil de nettoyage (100) en fonction de signaux de capteurs fournis par un système de capteurs (105), comprenant les étapes consistant à :
détecter (S1) des objets sales (O, O1 à O8) disposés dans une zone prédéfinie (A) par une unité de détection (140),
classifier (S2) chaque objet sale détecté (O, O1 à O8) selon une classe de saleté (K, K1 à K5) d'un nombre de différentes classes de saleté (K, K1 à K5),
déterminer (S3) un trajet optimisé (Bₒₚₜ) en fonction d'une position respective (P, P1 à P6) des objets sales détectés (O, O1 à O8) et de la classe de saleté respective (K, K1 à K5) des objets sales (O, O1 à O8), et
effectuer (S4) un parcours de nettoyage avec l'appareil de nettoyage (100) le long du trajet optimisé déterminé (Bₒₚₜ) par le dispositif de commande (130).

14. Produit-programme informatique qui initie l'exécution du procédé selon la revendication 13 sur un appareil commandé par programme.
